# EUROPEAN PATENT SPECIFICATION

(11) **EP 4 238 324 B1**
(45) Date of publication and mention of the grant of the patent: **02.12.2026**
(21) Application number: 21801623.6
(22) Date of filing: 05.10.2021
(51) Int. Cl.: H04W 4/029, H04W 4/44, H04L 67/52, H04L 67/56

(54) **SYSTEM, METHOD, AND COMPUTER PROGRAM FOR USING MOVING NETWORK CONNECTED VEHICLES TO DELIVER HIGH LEVEL CONNECTIVITY**
SYSTEM, VERFAHREN UND COMPUTERPROGRAMM ZUR VERWENDUNG VON BEWEGLICHEN NETZWERKVERBUNDENEN FAHRZEUGEN ZUR BEREITSTELLUNG VON HOCHGRADIGER KONNEKTIVITÄT
SYSTÈME, PROCÉDÉ, ET PROGRAMME INFORMATIQUE DESTINÉS À L'UTILISATION DE VÉHICULES MOBILES CONNECTÉS À UN RÉSEAU AFIN DE FOURNIR UNE CONNECTIVITÉ DE HAUT NIVEAU

(30) Priority: 28.10.2020 US 202017083131
(43) Date of publication of application: 06.09.2023
(73) Proprietor: Amdocs Development Limited, 3606 Limassol (CY)
(72) Inventor: CHEHANOWITZ, Sarit, 6941933 Tel Aviv (IL); BAHAR, Liat Taub, 4424677 Kfar Sabba (IL); UR, Shmuel, 2016400 Shorashim (IL)
(74) Representative: Houghton, Mark Phillip
(86) International application number: PCT/IB2021/059100
(87) International publication number: WO 2022/090838

(56) References cited:
- US-A1- 2019 052 914
- US-A1- 2019 387 455

## Description

### FIELD OF THE INVENTION

The present invention relates to configuration of edges in a network.

### BACKGROUND

Network connectivity for a user device significantly depends on the coverage of the network with respect to the location of the user device. Network coverage is available for a particular location when a network tower is within a vicinity of the location to enable communication between the network and the user device via antennas and electronic communications equipment located on the tower.

Thus, while some areas may have great connectivity (such as 5G network connectivity), others may have less of a connectivity, dependent on the available network coverage for the area. The difference could be a factor of 10 or 100. Because of technology, the coverage is expected to be very partial. 5G in particular is expected to be partial because, while being faster, it requires a much denser network. For example, an isolated house (e.g. outside of a city/town) will not have 5G connectivity available unless it has its own tower. Since many people don't want to have a tower next to their house, network coverage may be unavailable.

US 29/005 2914 discloses a media content delivery device, comprising one or more content demand processors, configured to determine a first location, the first location being a location for media content receipt; determine a second location, the second being a location for media content delivery; one or more vehicle coordination processors, configured to select a vehicle for media content transportation; cause the vehicle to wirelessly receive the media content at the first location; and cause the vehicle to deliver the media content at the second location.

US 29/038 7455 discloses a method for assigning a service to a vehicle-based mobile node. For example, a processor deployed in a communication network may receive a request for the service from a mobile endpoint device, determine a route of the mobile endpoint device, determine a route of the vehicle-based mobile node, and assign the service to the vehicle-based mobile node when the route of the mobile endpoint device and the route of the vehicle-based mobile node coincide

There is thus a need for addressing these and/or other issues associated with the prior art.

### SUMMARY

The present invention in its various aspects is as set out in the appended claims. As described herein, a system, method, and computer program are provided for using moving network connected vehicles to deliver high level network connectivity. In use, a request for digital content to be provided to a requesting device is received, the requesting device being a residential network router or a mobile device of a user. Additionally, responsive to the request, one or more moving network connected vehicles available to obtain the digital content when moving in a vicinity of a network and to provide the digital content to the requesting device when moving in a vicinity of the requesting device are determined. Further, the one or more moving network connected vehicles are caused to obtain the digital content when moving in the vicinity of the network and to provide the digital content to the requesting device when moving in the vicinity of the requesting device.

### BRIEF DESCRIPTION OF THE DRAWINGS

Figure **1** illustrates a method for using moving network connected vehicles to deliver high level network connectivity, in accordance with one embodiment.
Figure **2** illustrates a system that uses moving network connected vehicles to deliver high level network connectivity to a requesting device, in accordance with one embodiment.
Figure **3** illustrates a method for selecting moving network connected vehicles to deliver digital content to a requesting device, in accordance with one embodiment.
Figure **4** illustrates a block diagram of a flow to use moving network connected vehicles to deliver digital content to a requesting device, in accordance with one embodiment.
Figure **5** illustrates a network architecture, in accordance with one possible embodiment.
Figure **6** illustrates an exemplary system, in accordance with one embodiment.

### DETAILED DESCRIPTION

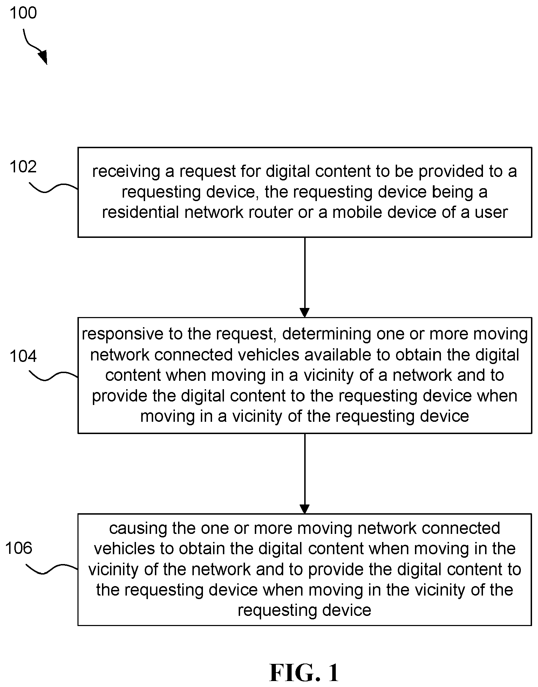

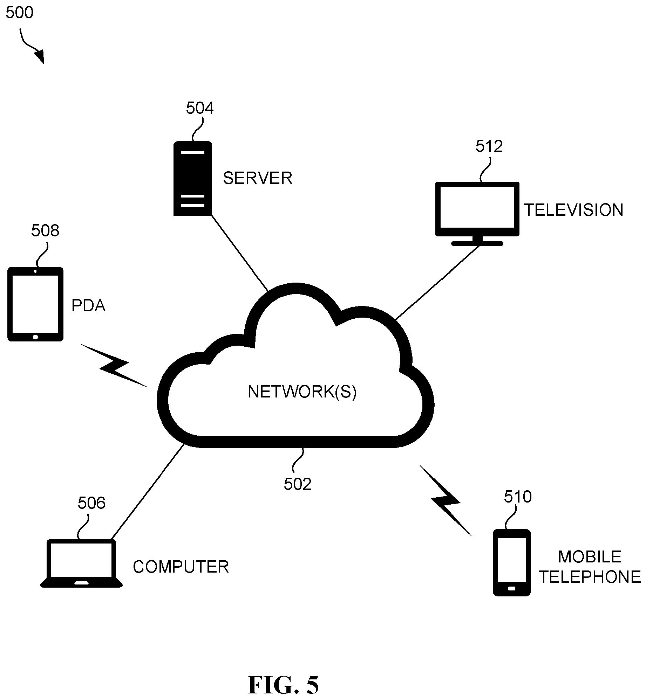

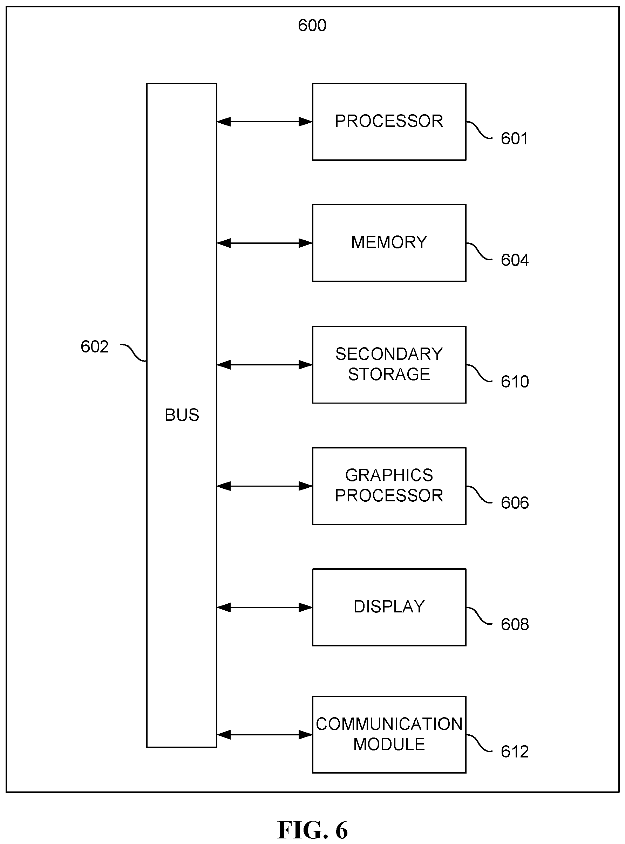

Figure **1** illustrates a method **100** for using moving network connected vehicles to deliver high level network connectivity, in accordance with one embodiment. The method **100** may be carried out by a computer processing system, such as any of the computing devices described below with reference to Figures **5** and/or **6.** For example, the method **100** may be carried out as a service of a communication service provider (CSP) or other network provider.

In operation **102,** a request for digital content to be provided to a requesting device is received, the requesting device being a residential network router or a mobile device of a user. The residential network router is a router located in a home or business which provides network connectivity to network-enabled devices in and around the home or business, such as televisions, mobile phones, tablet, laptops, etc. However, the residential network router or mobile device of the user, while 5G enabled or configured for another type of network, may be located in a low connectivity area which prohibits or limits connectivity to the network.

In on embodiment, the request may be received from the requesting device. For example, the request may be received directly from the mobile device of the user, such as a television, mobile phone, tablet, laptop, etc. In another embodiment, the request may be received from the residential network router. In this case, the request may still be initiated at the mobile device of the user but transmitted through the residential network router.

As noted above, the request is for digital content to be provided to the requesting device. Thus, the request may indicate the digital content. The digital content may be a movie, website, or other content capable of being transmitted digitally to the requesting device. Optionally, the request may indicate a source of the digital content and/or a location of the requesting device.

In operation **104,** one or more moving network connected vehicles available to obtain the digital content when moving in a vicinity of a network and to provide the digital content to the requesting device when moving in a vicinity of the requesting device are determined, responsive to the request. The moving network connected vehicles may be cars, trucks, or any other type of vehicle that moves and that is network connected (e.g. equipped with a network enabled computer system). The vicinity of the requesting device may refer to a predefined vicinity in which network communications are enabled with the requesting device. The vicinity of the network may refer to a predefined vicinity in which network communications are enabled with the particular network. In the context of the present description, the requesting device is not within the vicinity of the particular network, which provide higher broadband than a lower broadband network available in an area of the requesting device.

In one embodiment, determining one or more moving network connected vehicles may include using a navigation system to detect a plurality of moving network connected vehicles destined to be located within the vicinity of the network and at a later time within the vicinity of the requesting device. For example, the moving network connected vehicles may be those destined to be located within the vicinity of the network during a first defined time period and within the vicinity of the requesting device during a later defined time period. To this end, the one or more moving network connected vehicles may be anticipated to move in an area with a higher broadband coverage (e.g. 5G) than a lower broadband coverage available in an area of the requesting device.

In another embodiment, determining one or more moving network connected vehicles may include receiving an estimate from each moving network connected vehicle of the plurality of moving network connected vehicles of a size of data capable of being transmitted by the moving network connected vehicle to the requesting device when moving in the vicinity of the requesting device, and then evaluating the estimates received from the plurality of moving network connected vehicles to select the one or more moving network connected vehicles from the plurality of moving network connected vehicles. Each estimate may be based on a communication speed of the moving network connected vehicle, a communication speed of the requesting device, and/or a time duration in which the moving network connected vehicle is expected to be moving in the vicinity of the requesting device.

In yet another embodiment, determining one or more moving network connected vehicles may include making an agreement with the one or more (e.g. selected) moving network connected vehicles of the plurality of moving network connected vehicles to provide the digital content to the requesting device when moving in the vicinity of the requesting device. The agreement may include a confirmation that the one or more moving network connected vehicles will provide the digital content to the requesting device.

Further, in operation **106,** the one or more moving network connected vehicles are caused to obtain the digital content when moving in the vicinity of the network and to provide the digital content to the requesting device when moving in the vicinity of the requesting device. As an option, the one or more moving network connected vehicles may be instructed to retrieve (e.g. download) the digital content when moving in the vicinity of the network. As another option, the network may be instructed to provide (e.g. download) the digital content to the one or more moving network connected vehicles when moving in the vicinity of the network. In an embodiment, the one or more moving network connected vehicles may be instructed to provide the digital content to the requesting device when moving in the vicinity of the requesting device.

In one exemplary embodiment, a single moving network connected vehicle may be determined to be available to obtain the digital content when moving in the vicinity of the network provide the digital content to the requesting device when moving in a vicinity of the requesting device are determined, responsive to the request. In this case, the single moving network connected vehicle may be caused to retrieve an entirety of the digital content from a digital content source when moving in the vicinity of the network (or the network caused to provide the entirety of the digital content to the single moving network connected vehicle when moving in the vicinity of the network) and to provide the entirety of the digital content to the requesting device when moving in the vicinity of the requesting device.

In another exemplary embodiment, two or more moving network connected vehicles may be determined to be available to obtain the digital content when moving in the vicinity of the network provide the digital content to the requesting device when moving in a vicinity of the requesting device. In this case, each moving network connected vehicle of the two or more moving network connected vehicles may be caused to retrieve a respective portion of the digital content from a digital content source when moving in the vicinity of the network (or the network caused to provide respective portions of the digital content to the each of the moving network connected vehicles when moving in the vicinity of the network) and to provide the respective portion of the digital content to the requesting device. The respective portion to of the digital content to retrieve may be instructed to each moving network connected vehicle of the two or more moving network connected vehicles (or instructed to the network). The requesting device may then stitch together each respective portion of the digital content received from the two or more moving network connected vehicles to form the requested digital content.

As an option, the one or more moving network connected vehicles may obtain respective portions of the digital content from a digital content source via a plurality of different network stations within a current vicinity of the one or more moving network connected vehicles. For example, each of the moving network connected vehicles may be in the vicinity of a different network station (i.e. tower) at the time of retrieving its respective portion of the digital content, and thus may use the network station in its vicinity. As another example, as the vehicle moves from the vicinity of one network station to anther network station and so forth, the vehicle may obtain its respective portion of the digital content in subportions using the different network stations dependent on the network station within a current vicinity of the vehicle.

As another option, any one of the one or more moving network connected vehicles may provide its respective portion of the digital content to the requesting device via another one of the one or more moving network connected vehicles. This option may be useful where the vehicle is not in a vicinity of the requesting device long enough to transmit all of its respective portion of the digital content to the requesting device, in which case the other one of the moving network connected vehicles may aid the one of the moving network connected vehicles in providing its respective portion of the digital content to the requesting device. As a further option, causing the one or more moving network connected vehicles to provide the digital content to the requesting device may include instructing the one or more moving network connected vehicles to move at a speed that allows the one or more moving network connected vehicles to be within the vicinity of the requesting device for a period of time required to transmit the digital content to the requesting device.

To this end, the method 100 may enable a requesting device that itself is not within a coverage area of a desired network with high level network connectivity (e.g. 5G) to use moving network connected vehicles that are within the coverage area to obtain desired digital content via the desired network and then pass along that digital content to the requesting device via a local low level network connectivity available to the requesting device. As a result, the moving network connected vehicles may be used to obtain digital content via high level network connectivity and then provide the digital content to the requesting device.

More illustrative information will now be set forth regarding various optional architectures and uses in which the foregoing method may or may not be implemented, per the desires of the user. It should be strongly noted that the following information is set forth for illustrative purposes and should not be construed as limiting in any manner. Any of the following features may be optionally incorporated with or without the exclusion of other features described.

For many vehicles their route can be determined or predicted, including for car sharing, taxi, cars that use navigation, cargo fleets, most trucks, etc. For a device in a low connectivity area that wants to receive digital content (e.g. a movie), the system described herein can ask a car that moves through a high connectivity area to get some or all of the digital content, and then deliver the digital content to the device when the vehicle passes next to the device. Assume the peer to peer distance is 100M so a car may travel 150M in a vicinity of the requesting device. If it moves at 50KM/h it will be within the vicinity for about 10 seconds. If the connectivity gap is 20 (i.e. 5G 20 times faster than the current rate of communication with the device) this means that the system can give the device 200 seconds, or three minutes, of media at the local rate. The system can employ multiple cars going on the road for the same digital content request so that downloading a movie may go down from hours to minutes if there is 5G in the area and enough vehicles acting as mobile edges for the device.

This assumes that many of the cars are what is referred to as connected cars. This means that they have good computing, good communication, and good storage. This is a trend that everyone assumes now will continue. While the car is configured to connect with the internet, it also has the equipment to connect locally to other cars.

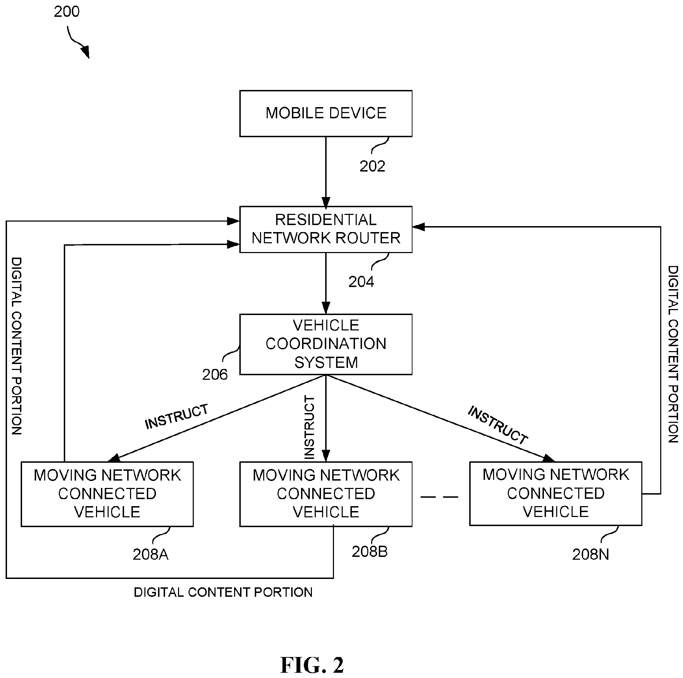

Figure **2** illustrates a system **200** that uses moving network connected vehicles to deliver high level network connectivity to a requesting device, in accordance with one embodiment. As an option, the system **200** may be implemented in the context of the details of the previous figure and/or any subsequent figure(s). Of course, however, the system **200** may be implemented in the context of any desired environment. Further, the aforementioned definitions may equally apply to the description below.

As shown, a mobile device **202** of a user communicates with a residential network router **204** to request digital content. The residential network router **204** sends a request for the digital content to the vehicle coordination system **206.** The vehicle coordination system **206** is in communication with the residential network router **204** via a first network (e.g. with low level network connectivity) and is in communication with moving network connected vehicles via a second network, in one embodiment.

Responsive to receipt of the request, the vehicle coordination system **206** determines one or more moving network connected vehicles **208A-N** available to obtain the digital content when moving in the vicinity of a network and to provide the digital content to the requesting device when moving in a vicinity of the requesting device. For example, the vehicle coordination system **206** may use a navigation system to determine the moving network connected vehicles available to obtain the digital content when moving in the vicinity of a network and to provide the digital content to the requesting device. The vehicle coordination system **206** then communicates with the moving network connected vehicles **208A-N** to cause them to obtain the digital content when moving in the vicinity of a network (or communicates with the network to provide the digital content to the moving network connected vehicles **208A-N** when moving in the vicinity of the network) and to provide the digital content to the residential network router **204** when moving in the vicinity of the residential network router **204.** Where the residential network router **204** receives multiple portions of the digital content from multiple different moving network connected vehicles **208A-N,** the residential network router **204** may stitch the portions together to form the digital content and may then provide the digital content to the mobile device **202.**

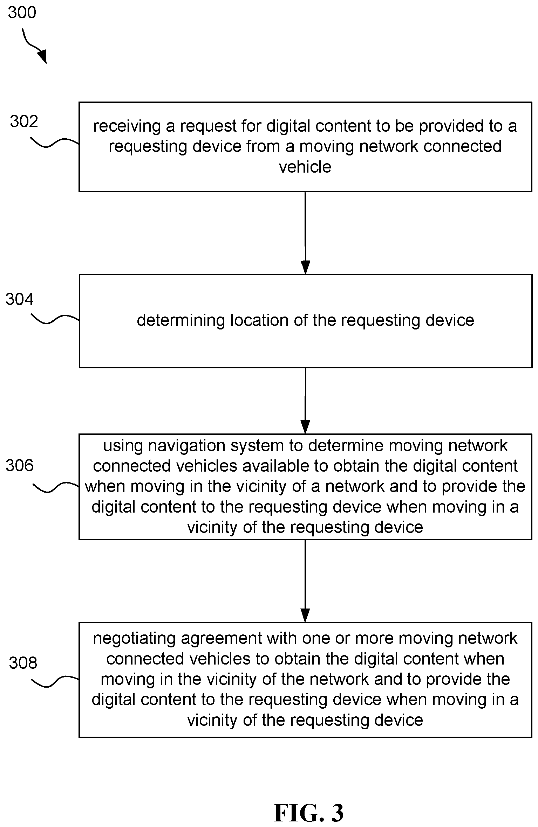

Figure **3** illustrates a method **300** for selecting moving network connected vehicles to deliver digital content to a requesting device, in accordance with one embodiment. As an option, the method **300** may be carried out in the context of the details of the previous figure and/or any subsequent figure(s). For example, the method **300** may be carried out by the vehicle coordination system **206** of Figure **2****.** Of course, however, the method **300** may be carried out in the context of any desired environment. Further, the aforementioned definitions may equally apply to the description below.

In operation **302,** a request for digital content to be provided to a requesting device from a moving network connected vehicle is received. For example, the request may be received from the requesting device.

In operation **304,** a location of the requesting device is determined. In one embodiment, the location may be indicated in the request. In another embodiment, a request for the location may be transmitted to the requesting device, in response to the receipt of the request for the digital content to be provided.

In operation **306,** a navigation system is used to determine moving network connected vehicles available to obtain the digital content when moving in the vicinity of a network and to provide the digital content to the requesting device when moving in a vicinity of the requesting device. For example, the navigation system finds vehicles that will move in the near future within a coverage area of the network and that will later move next to the place (e.g. house) having the requesting device. The navigation system also estimates the time at which the vehicles will be in the vicinity of the network and the vicinity of the requesting device.

In operation **308,** an agreement is negotiated with one or more of the moving network connected vehicles to provide the digital content to the requesting device when moving in a vicinity of the requesting device. In one embodiment, one or more of the moving network connected vehicles may agree to carry some amount of data for the requesting device. Optionally, a contract may be negotiated if micropayments are used. As another option, some credit may be given to an owner/driver/etc. of the vehicle instead of payment. The agreement may cause the one or more of the moving network connected vehicles to provide the digital content to the requesting device when moving in a vicinity of the requesting device.

Each of the vehicles may get an estimate of the size of data it could transfer depending on a minimum between the vehicle communication speed and the requesting device communication speed, with the minimum then multiplied by an expected time the vehicle will be within the vicinity of the requesting device. The vehicle may get the digital content (e.g. from the system), which may optionally be encrypted, before arriving in the vicinity of the requesting device. As the vehicle arrives within the vicinity of the requesting device, it communicates the digital content to the requesting device. The requesting device decrypts the digital content, if needed, and creates from it and the other vehicles sources the entire digital content it needed (e.g. by stitching together separately received portions of the digital content).

In an embodiment, the digital content is time sensitive. For example, for a movie, the requesting device may want the digital content on specific scenes to be delivered before those scenes on presented on the device. It is possible that some scenes will be received by the device with higher resolutions than others.

### Vehicle to vehicle digital content transfer

Assume a vehicle can deliver the requesting device 300M because that is what it can deliver during the time it is within the vicinity of the requesting device given the equipment the requesting device and the vehicle have. Assume the vehicle can upload 900M while in 5G reception. One way to work it out is to deliver 300M to the requesting device and then deliver portions of the digital content to the vehicles moving in the other direction, so that they will deliver those portions to the requesting device when passing by it. It may also deliver to vehicles next to it, if the bottleneck in the delivery was the vehicle equipment (i.e. when the requesting device can receive more than 300M, but the vehicle cannot deliver more). However, as likely the requesting device will be the bottleneck (vehicles are expected to have very good communication equipment), in which case the vehicle needs to find another moving vehicle that will be in the vicinity of the requesting device when the vehicle itself is not vehicle. This could be vehicles on the other side of the road that the vehicle communicates with after passing the requesting device.

### High congestion scenario

In venues where there is high congestion, the vehicles will constitute hot spots to be shared for any device that requires it. A high congestion venue may include an event (e.g. a concert). 5G may exist but it is not enough due to many data consumers in the area, and so each does not get the network connectivity level that it wants. Vehicles that move next to the event can add additional data for those in need.

### Requiring many types of connectivity - control by the residential router

It is likely that the requesting device has multiple connectivity consumers, for example one person wants to see a movie and another wants to have a video conference. The residential router will give preference to the person requesting the video conference, as she needs low latency. The other person that does not care about latency but has a high broad band requirement (e.g. his movie is 3G) can get the data from the moving vehicles acting as network edges, thus reducing the overload and improving the video conference experience for the other person.

### Helping places that have low amount of traffic

If vehicles are rarely in the vicinity of the requesting device, it may be desired to put more of the digital content, or multiple different digital content requested by the requesting device, on the vehicle, and ask it to slow down for a few seconds within the vicinity of the requesting device. This could be relevant in a rural area, were both conditions (i.e. less cars and helping neighbors) is more common. For a smart connected vehicle, it could tell the driver that the owner of the requesting device will appreciate it if she slows down the car when in the vicinity of the requesting device. Notice that this is true for delivering or receiving to/from the requesting device. However, for uploading the data on the vehicle to begin with (or downloading), this could be done in multiple ways (or combining them). In one embodiment, the car will upload in multiple 5G stations loading more this way. For example, in the first station it loads D, in the second D' and now it has DD'. In another embodiment, the car will upload both from 5G station and from other mobile nodes. For example, car A and B move next to 5G station X. Station X downloads to vehicle A data D, and to vehicle B data D'. After they move away from X continuing in the same direction B delivers D' to A so now A has DD' which it can upload to the requesting device.

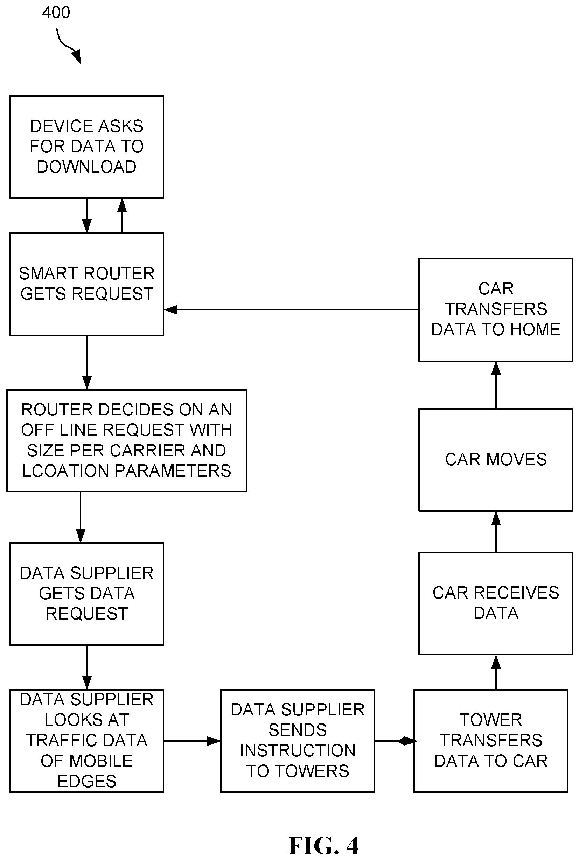

Figure **4** illustrates a block diagram of a flow **400** to use moving network connected vehicles to deliver digital content to a requesting device, in accordance with one embodiment. As an option, the flow **400** may be carried out in the context of the details of the previous figure and/or any subsequent figure(s). Of course, however, the flow **400** may be carried out in the context of any desired environment. Further, the aforementioned definitions may equally apply to the description below.

As shown, a device (or user thereof) requests digital content (data) to download. The device sends the request to a smart router (i.e. residential router). The smart router decides to ask for the data in an offline way. It asks for the digital content and indicates how much can be downloaded by one moving edge (connected vehicle). The data supplier (i.e. vehicle coordination system) gets the request, and looks at traffic data to finds a network tower in which to send it through, including size and destination information.

A network tower gets the request and the additional information and determines which mobile edge to give it to. The tower transfers the digital content and the additional information to the mobile edge. The mobile edge moves, and when the mobile edge is in the right location it transfers the digital content to the smart router after checking it is the right destination (using a validation protocol). The smart router may stich the data or may transfer it as is to the device.

It is possible that multiple mobile edges will be needed in which case the process will be the same with the following modifications.
1) A device (say a phone, or a computer) wants a large file like a movie.
2) It asks the smart router for it.
3) The smart router decides to ask for it in offline way. It asks for the movie and indicates how much can be downloaded by one moving edge (connected car).
4) The data supplier gets the request.
5) The data supplier divides the requests to multiple requests (as one transfer is not enough).
6) For each request of the multiple requests:
   a) The data supplier looks at traffic data, and finds a tower in which to send it through, this includes size and destination information.
   b) A tower gets the data and additional information and decides which mobile edge to give it to.
   c) The tower transfers the data to the mobile edge.
   d) The mobile edge moves.
   e) When the mobile edge is in the right location it transfer the data to the smart router after checking it is the right destination (using a validation protocol).
   f) The smart router may stich the data or may transfer it as is to the device.

Figure **5** illustrates a network architecture **500,** in accordance with one possible embodiment. As shown, at least one network **502** is provided. In the context of the present network architecture **500,** the network **502** may take any form including, but not limited to a telecommunications network, a local area network (LAN), a wireless network, a wide area network (WAN) such as the Internet, peer-to-peer network, cable network, etc. While only one network is shown, it should be understood that two or more similar or different networks **502** may be provided.

Coupled to the network **502** is a plurality of devices. For example, a server computer **504** and an end user computer **506** may be coupled to the network **502** for communication purposes. Such end user computer **506** may include a desktop computer, lap-top computer, and/or any other type of logic. Still yet, various other devices may be coupled to the network **502** including a personal digital assistant (PDA) device **508,** a mobile phone device **510,** a television **512,** etc.

Figure 6 illustrates an exemplary system **600,** in accordance with one embodiment. As an option, the system **600** may be implemented in the context of any of the devices of the network architecture **500** of Figure **5****.** Of course, the system **600** may be implemented in any desired environment.

As shown, a system **600** is provided including at least one central processor **601** which is connected to a communication bus **602.** The system **600** also includes main memory **604** [e.g. random access memory (RAM), etc.]. The system **600** also includes a graphics processor **606** and a display **608.**

The system **600** may also include a secondary storage **610.** The secondary storage **610** includes, for example, solid state drive (SSD), flash memory, a removable storage drive, etc. The removable storage drive reads from and/or writes to a removable storage unit in a well-known manner.

Computer programs, or computer control logic algorithms, may be stored in the main memory **604,** the secondary storage **610,** and/or any other memory, for that matter. Such computer programs, when executed, enable the system **600** to perform various functions (as set forth above, for example). Memory **604,** storage **610** and/or any other storage are possible examples of non-transitory computer-readable media.

The system **600** may also include one or more communication modules **612.** The communication module **612** may be operable to facilitate communication between the system **600** and one or more networks, and/or with one or more devices through a variety of possible standard or proprietary communication protocols (e.g. via Bluetooth, Near Field Communication (NFC), Cellular communication, etc.).

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; and the like.

It should be understood that the arrangement of components illustrated in the Figures described are exemplary and that other arrangements are possible. It should also be understood that the various system components (and means) defined by the claims, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the claims is implemented at least partially as an electronic hardware component, such as an instruction execution machine (e.g., a processor-based or processor-containing machine) and/or as specialized circuits or circuitry (e.g., discreet logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that several of the acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Although the invention has been explained in relation to its preferred embodiment(s) as mentioned above, it is to be understood that many other possible modifications and variations can be made without departing from the scope of the present invention, which is defined by the claims.

## Claims

1. A non-transitory computer readable medium storing computer code executable by a processor to perform a method comprising:
- receiving, by a vehicle coordination system (206) a request for digital content to be provided to a requesting device, the requesting device being a residential network router (204) or a mobile device (202) of a user;
- responsive to the request, determining, by the vehicle coordination system (206), one or more moving network connected vehicles (208A-N) available to obtain the digital content when moving in a vicinity of a network and to provide the digital content to the requesting device when moving in a vicinity of the requesting device; and
- causing, by the vehicle coordination system (206), the one or more moving network connected vehicles (208A-N) to obtain the digital content when moving in the vicinity of the network and to provide the digital content to the requesting device when moving in the vicinity of the requesting device,
wherein determining one or more moving network connected vehicles (208A-N) includes:
(i) using a navigation system to detect a plurality of moving network connected vehicles (208A-N) destined to be located within the vicinity of the network and later within the vicinity of the requesting device (202, 204), and
(ii) receiving an estimate from each moving network connected vehicle (208A-N) of the plurality of moving network connected vehicles of a size of data capable of being transmitted by the moving network connected vehicle (208A-N) to the requesting device (202, 204) when moving in the vicinity of the requesting device, and evaluating the estimates received from the plurality of moving network connected vehicles to select the one or more moving network connected vehicles (208A-N) from the plurality of moving network connected vehicles,
wherein the estimate is based on :
a communication speed of the moving network connected vehicle (208A-N),
a communication speed of the requesting device (202, 204), and
a time duration in which the moving network connected vehicle (208A-N) is expected to be moving in the vicinity of the requesting device (202, 204).

2. The non-transitory computer readable medium of claim 1, wherein the request is received from the requesting device (202, 204).

3. The non-transitory computer readable medium of claim 1, wherein the request indicates a location of the requesting device (202, 204).

4. The non-transitory computer readable medium of claim 1, wherein the vicinity of the network is a predefined vicinity in which network communications are enabled with the network, and wherein the vicinity of the requesting device (202, 204) is a predefined vicinity in which network communications are enabled with the requesting device (202, 204).

5. The non-transitory computer readable medium of claim 1, wherein the requesting device is a residential router (204) with multiple connected consumers and wherein the residential router gives preference to a connected consumer requiring the lowest latency.

6. The non-transitory computer readable medium of claim 1, wherein the plurality of moving network connected vehicles (208A-N) are destined to be located within the vicinity of the network within a first defined time period and to be located within the vicinity of the requesting device (202, 204) during a later defined time period.

7. The non-transitory computer readable medium of claim 1, wherein causing, by the vehicle coordination system (206), the one or more moving network connected vehicles (208A-N) to obtain the digital content comprises:
a first moving network connected vehicle (208A) moving in the vicinity of the network and providing a portion of the digital content to the requesting device (202, 204) when moving in the vicinity of the requesting device,
the first moving network connected vehicle (208A) moving out of the vicinity of the network;
the first moving network connected vehicle (208A) transferring another portion of the digital content to a second moving network connected vehicle (208B) that is moving toward the vicinity of the network; and
the second moving network connected vehicle (208B) providing the another portion of the digital content to the requesting device (202, 204).

8. The non-transitory computer readable medium of claim 1, wherein determining one or more moving network connected vehicles (208A-N) includes making an agreement with the one or more moving network connected vehicles (208A-N) of the plurality of moving network connected vehicles to provide the digital content to the requesting device (202, 204) when moving in the vicinity of the requesting device.

9. The non-transitory computer readable medium of claim 1, wherein the one or more moving network connected vehicles (208A-N) is a single moving network connected vehicle.

10. The non-transitory computer readable medium of claim 9, wherein causing the single moving network connected vehicle (208A) to obtain the digital content when moving in a vicinity of a network and to provide the digital content to the requesting device (202, 204) when moving in the vicinity of the requesting device includes causing the single moving network connected vehicle (208A) to obtain an entirety of the digital content from a digital content source and to provide the entirety of the digital content to the requesting device (202, 204) when moving in the vicinity of the requesting device.

11. The non-transitory computer readable medium of claim 1, wherein the one or more moving network connected vehicles (208A-N) is two or more moving network connected vehicles.

12. The non-transitory computer readable medium of claim 11, wherein causing the two or more moving network connected vehicles (208A-N) to obtain the digital content when moving in a vicinity of a network and to provide the digital content to the requesting device (202, 204) when moving in the vicinity of the requesting device includes causing each moving network connected vehicle (208A-N) of the two or more moving network connected vehicles to obtain a respective portion of the digital content from a digital content source and to provide the respective portion of the digital content to the requesting device (202, 204).

13. The non-transitory computer readable medium of claim 12, wherein the requesting device (202, 204) stitches together each respective portion of the digital content received from the two or more moving network connected vehicles (208A-N).

14. The non-transitory computer readable medium of claim 1, wherein the one or more moving network connected vehicles (208A-N) obtain respective portions of the digital content from a digital content source via a plurality of different network stations within a current vicinity of the one or more moving network connected vehicles (208A-N).

15. The non-transitory computer readable medium of claim 1, wherein at least a first one of the one or more moving network connected vehicles (208A) provides at least a portion of the digital content to the requesting device (202, 204) via at least a second one of the one or more moving network connected vehicles (208B).

16. The non-transitory computer readable medium of claim 1, wherein causing, by the vehicle coordination system (206), the one or more moving network connected vehicles (208A-N) to obtain the digital content includes instructing the one or more moving network connected vehicles (208A-N) to move at a speed that allows the one or more moving network connected vehicles to be within the vicinity of the requesting device (202, 204) for a period of time required to transmit the digital content to the requesting device.

17. The non-transitory computer readable medium of claim 1, wherein the network provides higher broadband than a lower broadband network available in an area of the requesting device (202, 204).

18. The non-transitory computer readable medium of claim 1, wherein causing, by the vehicle coordination system (206), the one or more moving network connected vehicles (208A-N) to obtain the digital content when moving in the vicinity of the network includes one of:
causing the one or more moving network connected vehicles (208A-N) to retrieve the digital content from a digital content source when moving in the vicinity of the network, or
causing the network to provide the digital content from the digital content source to the one or more moving network connected vehicles (208A-N) when moving in the vicinity of the network.

19. A method, comprising:
- receiving, by a vehicle coordination system (206),
a request for digital content to be provided to a requesting device, the requesting device being a residential network router or a mobile device of a user;
responsive to the request, determining, by the vehicle coordination system (206), one or more moving network connected vehicles available to obtain the digital content when moving in a vicinity of a network and to provide the digital content to the requesting device (202, 204) when moving in a vicinity of the requesting device; and
causing, by the vehicle coordination system (206), the one or more moving network connected vehicles (208A-N) to obtain the digital content when moving in the vicinity of the network and to provide the digital content to the requesting device (202, 204) when moving in the vicinity of the requesting device,
wherein determining one or more moving network connected vehicles available to obtain the digital content when moving in a vicinity of a network and to provide the digital content to the requesting device when moving in a vicinity of the requesting device (202, 204) includes:
(i) using a navigation system to detect a plurality of moving network connected vehicles (208A-N) destined to be located within the vicinity of the network and later within the vicinity of the requesting device (202, 204), and
(ii) receiving an estimate from each moving network connected vehicle (208A-N) of the plurality of moving network connected vehicles of a size of data capable of being transmitted by the moving network connected vehicle to the requesting device when moving in the vicinity of the requesting device, and
evaluating the estimates received from the plurality of moving network connected vehicles to select the one or more moving network connected vehicles from the plurality of moving network connected vehicles,
wherein the estimate is based on :
a communication speed of the moving network connected vehicle,
a communication speed of the requesting device, and
a time duration in which the moving network connected vehicle is expected to be moving in the vicinity of the requesting device.

20. A system, comprising:
a non-transitory memory storing instructions; and
one or more processors in communication with the non-transitory memory that execute the instructions to perform the method of claim 19.

## Patentansprüche

1. Nichtflüchtiges computerlesbares Medium, das Computercode speichert, der durch einen Prozessor ausführbar ist, um ein Verfahren durchzuführen, umfassend:
- Empfangen, durch ein Fahrzeugkoordinationssystem (206), einer Anforderung nach digitalen Inhalten, die einer anfordernden Vorrichtung bereitzustellen sind, wobei die anfordernde Vorrichtung ein Heimnetzwerkrouter (204) oder eine mobile Vorrichtung (202) eines Benutzers ist;
- als Reaktion auf die Anforderung, Bestimmen, durch das Fahrzeugkoordinationssystem (206), eines oder mehrerer sich bewegender, mit einem Netzwerk verbundener Fahrzeuge (208A-N), die verfügbar sind, um die digitalen Inhalte zu erhalten, wenn sie sich in der Nähe eines Netzwerks bewegen, und um die digitalen Inhalte der anfordernden Vorrichtung bereitzustellen, wenn sie sich in der Nähe der anfordernden Vorrichtung bewegen; und
- Veranlassen, durch das Fahrzeugkoordinationssystem (206), des einen oder der mehreren sich bewegenden, mit einem Netzwerk verbundenen Fahrzeuge (208A-N), die digitalen Inhalte zu erhalten, wenn sie sich in der Nähe des Netzwerks bewegen, und die digitalen Inhalte der anfordernden Vorrichtung bereitzustellen, wenn sie sich in der Nähe der anfordernden Vorrichtung bewegen,
wobei das Bestimmen eines oder mehrerer sich bewegender, mit einem Netzwerk verbundener Fahrzeuge (208A-N) Folgendes einschließt:
(i) Verwenden eines Navigationssystems, um eine Vielzahl von sich bewegenden, mit einem Netzwerk verbundenen Fahrzeugen (208A-N) zu erkennen, die dazu vorgesehen sind, sich innerhalb der Nähe des Netzwerks und später innerhalb der Nähe der anfordernden Vorrichtung (202, 204) zu befinden, und
(ii) Empfangen einer Schätzung von jedem sich bewegenden, mit einem Netzwerk verbundenen Fahrzeug (208A-N) der Vielzahl von sich bewegenden, mit einem Netzwerk verbundenen Fahrzeugen bezüglich einer Größe von Daten, die durch das sich bewegende, mit einem Netzwerk verbundene Fahrzeug (208A-N) an die anfordernde Vorrichtung (202, 204) übertragen werden können, wenn es sich in der Nähe der anfordernden Vorrichtung bewegt, und Auswerten der empfangenen Schätzungen der Vielzahl von sich bewegenden, mit einem Netzwerk verbundenen Fahrzeugen, um das eine oder die mehreren sich bewegenden, mit einem Netzwerk verbundenen Fahrzeuge (208A-N) aus der Vielzahl von sich bewegenden, mit einem Netzwerk verbundenen Fahrzeugen auszuwählen,
wobei die Schätzung auf Folgendem basiert:
einer Kommunikationsgeschwindigkeit des sich bewegenden, mit einem Netzwerk verbundenen Fahrzeugs (208A-N),
einer Kommunikationsgeschwindigkeit der anfordernden Vorrichtung (202, 204), und
einer Zeitdauer, während der erwartet wird, dass sich das sich bewegende, mit einem Netzwerk verbundene Fahrzeug (208A-N) in der Nähe der anfordernden Vorrichtung (202, 204) bewegt.

2. Nichtflüchtiges computerlesbares Medium nach Anspruch 1, wobei die Anforderung von der anfordernden Vorrichtung (202, 204) empfangen wird.

3. Nichtflüchtiges computerlesbares Medium nach Anspruch 1, wobei die Anforderung einen Standort der anfordernden Vorrichtung (202, 204) angibt.

4. Nichtflüchtiges computerlesbares Medium nach Anspruch 1, wobei die Nähe des Netzwerks eine vordefinierte Nähe ist, in der Netzwerkkommunikationen mit dem Netzwerk ermöglicht werden, und wobei die Nähe der anfordernden Vorrichtung (202, 204) eine vordefinierte Nähe ist, in der Netzwerkkommunikationen mit der anfordernden Vorrichtung (202, 204) ermöglicht werden.

5. Nichtflüchtiges computerlesbares Medium nach Anspruch 1, wobei die anfordernde Vorrichtung ein Heimrouter (204) mit mehreren verbundenen Verbrauchern ist und wobei der Heimrouter einem verbundenen Verbraucher, der die niedrigste Latenz erfordert, Vorrang einräumt.

6. Nichtflüchtiges computerlesbares Medium nach Anspruch 1, wobei die Vielzahl von sich bewegenden, mit einem Netzwerk verbundenen Fahrzeugen (208A-N) vorgesehen ist, sich innerhalb eines ersten definierten Zeitraums innerhalb der Nähe des Netzwerks zu befinden und sich während eines späteren definierten Zeitraums innerhalb der Nähe der anfordernden Vorrichtung (202, 204) zu befinden.

7. Nichtflüchtiges computerlesbares Medium nach Anspruch 1, wobei das Veranlassen, durch das Fahrzeugkoordinationssystem (206), des einen oder der mehreren sich bewegenden, mit einem Netzwerk verbundenen Fahrzeuge (208AN), die digitalen Inhalte zu erhalten, Folgendes umfasst:
Bewegen eines ersten sich bewegenden, mit einem Netzwerk verbundenen Fahrzeugs (208A) in der Nähe des Netzwerks und Bereitstellen eines Abschnitts der digitalen Inhalte für die anfordernde Vorrichtung (202, 204), wenn es sich in der Nähe der anfordernden Vorrichtung bewegt,
Herausbewegen des ersten sich bewegenden, mit einem Netzwerk verbundenen Fahrzeugs (208A) heraus aus der Nähe des Netzwerks;
Übertragen eines weiteren Abschnitts der digitalen Inhalte durch das erste sich bewegende, mit einem Netzwerk verbundene Fahrzeug (208A) an ein zweites sich bewegendes, mit einem Netzwerk verbundenes Fahrzeug (208B), das sich in Richtung der Nähe des Netzwerks bewegt; und
Bereitstellen des weiteren Abschnitts der digitalen Inhalte durch das zweite sich bewegende, mit einem Netzwerk verbundene Fahrzeug (208B) für die anfordernde Vorrichtung (202, 204).

8. Nichtflüchtiges computerlesbares Medium nach Anspruch 1, wobei das Bestimmen eines oder mehrerer sich bewegender, mit einem Netzwerk verbundener Fahrzeuge (208A-N) das Treffen einer Vereinbarung mit dem einen oder den mehreren sich bewegenden, mit einem Netzwerk verbundenen Fahrzeugen (208A-N) der Vielzahl von sich bewegenden, mit einem Netzwerk verbundenen Fahrzeugen einschließt, um die digitalen Inhalte der anfordernden Vorrichtung (202, 204) bereitzustellen, wenn sie sich in der Nähe der anfordernden Vorrichtung bewegen.

9. Nichtflüchtiges computerlesbares Medium nach Anspruch 1, wobei das eine oder die mehreren sich bewegenden, mit einem Netzwerk verbundenen Fahrzeuge (208A-N) ein einzelnes sich bewegendes, mit einem Netzwerk verbundenes Fahrzeug sind.

10. Nichtflüchtiges computerlesbares Medium nach Anspruch 9, wobei das Veranlassen des einzelnen sich bewegenden, mit einem Netzwerk verbundenen Fahrzeugs (208A), die digitalen Inhalte zu erhalten, wenn es sich in der Nähe eines Netzwerks bewegt, und die digitalen Inhalte der anfordernden Vorrichtung (202, 204) bereitzustellen, wenn es sich in der Nähe der anfordernden Vorrichtung bewegt, das Veranlassen des einzelnen sich bewegenden, mit einem Netzwerk verbundenen Fahrzeugs (208A) einschließt, die Gesamtheit der digitalen Inhalte von einer Quelle digitaler Inhalte zu erhalten und die Gesamtheit der digitalen Inhalte der anfordernden Vorrichtung (202, 204) bereitzustellen, wenn es sich in der Nähe der anfordernden Vorrichtung bewegt.

11. Nichtflüchtiges computerlesbares Medium nach Anspruch 1, wobei das eine oder die mehreren sich bewegenden, mit einem Netzwerk verbundenen Fahrzeuge (208A-N) zwei oder mehr sich bewegende, mit einem Netzwerk verbundene Fahrzeuge sind.

12. Nichtflüchtiges computerlesbares Medium nach Anspruch 11, wobei das Veranlassen der zwei oder mehr sich bewegenden, mit einem Netzwerk verbundenen Fahrzeuge (208A-N), die digitalen Inhalte zu erhalten, wenn sie sich in der Nähe eines Netzwerks bewegen, und die digitalen Inhalte der anfordernden Vorrichtung (202, 204) bereitzustellen, wenn sie sich in der Nähe der anfordernden Vorrichtung bewegen, das Veranlassen jedes sich bewegenden, mit einem Netzwerk verbundenen Fahrzeugs (208A-N) der zwei oder mehr sich bewegenden, mit einem Netzwerk verbundenen Fahrzeuge einschließt, einen jeweiligen Abschnitt der digitalen Inhalte von einer Quelle digitaler Inhalte zu erhalten und den jeweiligen Abschnitt der digitalen Inhalte der anfordernden Vorrichtung (202, 204) bereitzustellen.

13. Nichtflüchtiges computerlesbares Medium nach Anspruch 12, wobei die anfordernde Vorrichtung (202, 204) jeden jeweiligen Abschnitt der digitalen Inhalte, der von den zwei oder mehr sich bewegenden, mit einem Netzwerk verbundenen Fahrzeugen (208A-N) empfangen wurde, zusammensetzt.

14. Nichtflüchtiges computerlesbares Medium nach Anspruch 1, wobei das eine oder die mehreren sich bewegenden, mit einem Netzwerk verbundenen Fahrzeuge (208A-N) jeweilige Abschnitte der digitalen Inhalte von einer Quelle digitaler Inhalte über eine Vielzahl von unterschiedlichen Netzwerkstationen innerhalb einer aktuellen Nähe des einen oder der mehreren sich bewegenden, mit einem Netzwerk verbundenen Fahrzeuge (208A-N) erhalten.

15. Nichtflüchtiges computerlesbares Medium nach Anspruch 1, wobei mindestens ein erstes des einen oder der mehreren sich bewegenden, mit einem Netzwerk verbundenen Fahrzeuge (208A) mindestens einen Abschnitt der digitalen Inhalte der anfordernden Vorrichtung (202, 204) über mindestens ein zweites des einen oder der mehreren sich bewegenden, mit einem Netzwerk verbundenen Fahrzeuge (208B) bereitstellt.

16. Nichtflüchtiges computerlesbares Medium nach Anspruch 1, wobei das Veranlassen, durch das Fahrzeugkoordinationssystem (206), des einen oder der mehreren sich bewegenden, mit einem Netzwerk verbundenen Fahrzeuge (208AN), die digitalen Inhalte zu erhalten, das Anweisen des einen oder der mehreren sich bewegenden, mit einem Netzwerk verbundenen Fahrzeuge (208A-N) einschließt, sich mit einer Geschwindigkeit zu bewegen, die es dem einen oder den mehreren sich bewegenden, mit einem Netzwerk verbundenen Fahrzeugen ermöglicht, sich für einen Zeitraum, der zum Übertragen der digitalen Inhalte an die anfordernde Vorrichtung erforderlich ist, innerhalb der Nähe der anfordernden Vorrichtung (202, 204) zu befinden.

17. Nichtflüchtiges computerlesbares Medium nach Anspruch 1, wobei das Netzwerk eine höhere Breitbandleistung als ein Netzwerk mit niedrigerer Breitbandleistung bereitstellt, das in einem Bereich der anfordernden Vorrichtung (202, 204) verfügbar ist.

18. Nichtflüchtiges computerlesbares Medium nach Anspruch 1, wobei das Veranlassen, durch das Fahrzeugkoordinationssystem (206), des einen oder der mehreren sich bewegenden, mit einem Netzwerk verbundenen Fahrzeuge (208AN), die digitalen Inhalte zu erhalten, wenn sie sich in der Nähe des Netzwerks bewegen, eines von Folgendem einschließt:
Veranlassen des einen oder der mehreren sich bewegenden, mit einem Netzwerk verbundenen Fahrzeuge (208A-N), die digitalen Inhalte von einer Quelle digitaler Inhalte abzurufen, wenn sie sich in der Nähe des Netzwerks bewegen, oder
Veranlassen des Netzwerks, die digitalen Inhalte von der Quelle digitaler Inhalte dem einen oder den mehreren sich bewegenden, mit einem Netzwerk verbundenen Fahrzeugen (208A-N) bereitzustellen, wenn sie sich in der Nähe des Netzwerks bewegen.

19. Verfahren, umfassend:
- Empfangen, durch ein Fahrzeugkoordinationssystem (206), einer Anforderung nach digitalen Inhalten, die einer anfordernden Vorrichtung bereitzustellen sind, wobei die anfordernde Vorrichtung ein Heimnetzwerkrouter oder eine mobile Vorrichtung eines Benutzers ist;
als Reaktion auf die Anforderung, Bestimmen, durch das Fahrzeugkoordinationssystem (206), eines oder mehrerer sich bewegender, mit einem Netzwerk verbundener Fahrzeuge, die verfügbar sind, um die digitalen Inhalte zu erhalten, wenn sie sich in der Nähe eines Netzwerks bewegen, und um die digitalen Inhalte der anfordernden Vorrichtung (202, 204) bereitzustellen, wenn sie sich in der Nähe der anfordernden Vorrichtung bewegen; und
Veranlassen, durch das Fahrzeugkoordinationssystem (206), des einen oder der mehreren sich bewegenden, mit einem Netzwerk verbundenen Fahrzeuge (208A-N), die digitalen Inhalte zu erhalten, wenn sie sich in der Nähe des Netzwerks bewegen, und die digitalen Inhalte der anfordernden Vorrichtung (202, 204) bereitzustellen, wenn sie sich in der Nähe der anfordernden Vorrichtung bewegen,
wobei das Bestimmen eines oder mehrerer sich bewegender, mit einem Netzwerk verbundener Fahrzeuge, die verfügbar sind, um die digitalen Inhalte zu erhalten, wenn sie sich in der Nähe eines Netzwerks bewegen, und um die digitalen Inhalte der anfordernden Vorrichtung bereitzustellen, wenn sie sich in der Nähe der anfordernden Vorrichtung (202, 204) bewegen, Folgendes einschließt:
(i) Verwenden eines Navigationssystems, um eine Vielzahl von sich bewegenden, mit einem Netzwerk verbundenen Fahrzeugen (208A-N) zu erkennen, die dazu vorgesehen sind, sich innerhalb der Nähe des Netzwerks und später innerhalb der Nähe der anfordernden Vorrichtung (202, 204) zu befinden, und
(ii) Empfangen einer Schätzung von jedem sich bewegenden, mit einem Netzwerk verbundenen Fahrzeug (208A-N) der Vielzahl von sich bewegenden, mit einem Netzwerk verbundenen Fahrzeugen bezüglich einer Größe von Daten, die durch das sich bewegende, mit einem Netzwerk verbundene Fahrzeug an die anfordernde Vorrichtung übertragen werden können, wenn es sich in der Nähe der anfordernden Vorrichtung bewegt, und
Auswerten der empfangenen Schätzungen der Vielzahl von sich bewegenden, mit einem Netzwerk verbundenen Fahrzeugen, um das eine oder die mehreren sich bewegenden, mit einem Netzwerk verbundenen Fahrzeuge aus der Vielzahl von sich bewegenden, mit einem Netzwerk verbundenen Fahrzeugen auszuwählen,
wobei die Schätzung auf Folgendem basiert:
einer Kommunikationsgeschwindigkeit des sich bewegenden, mit einem Netzwerk verbundenen Fahrzeugs,
einer Kommunikationsgeschwindigkeit der anfordernden Vorrichtung, und
einer Zeitdauer, während der erwartet wird, dass sich das sich bewegende, mit einem Netzwerk verbundene Fahrzeug in der Nähe der anfordernden Vorrichtung bewegt.

20. System, umfassend:
einen nichtflüchtigen Speicher, der Anweisungen speichert; und
einen oder mehrere Prozessoren, die mit dem nichtflüchtigen Speicher in Kommunikation stehen und die Anweisungen ausführen, um das Verfahren nach Anspruch 19 durchzuführen.

## Revendications

1. Support non transitoire lisible par ordinateur stockant un code informatique exécutable par un processeur pour mettre en œuvre un procédé comprenant :
- la réception, par un système de coordination de véhicule (206) d'une demande pour un contenu numérique à fournir à un dispositif demandeur, le dispositif demandeur étant un routeur réseau domestique (204) ou un dispositif mobile (202) d'un utilisateur ;
- en réponse à la demande, la détermination, par le système de coordination de véhicule (206), d'un ou plusieurs véhicules en mouvement connectés à un réseau (208A-N) disponibles pour obtenir le contenu numérique lors d'un mouvement dans un voisinage d'un réseau et pour fournir le contenu numérique au dispositif demandeur lors d'un mouvement dans un voisinage du dispositif demandeur ; et
- le fait d'amener, par le système de coordination de véhicule (206), le ou les véhicules en mouvement connectés à un réseau (208A-N) à obtenir le contenu numérique lors d'un mouvement dans le voisinage du réseau et à fournir le contenu numérique au dispositif demandeur lors d'un mouvement dans le voisinage du dispositif demandeur,
dans lequel la détermination d'un ou plusieurs véhicules en mouvement connectés à un réseau (208A-N) comporte :
(i) l'utilisation d'un système de navigation pour détecter une pluralité de véhicules en mouvement connectés à un réseau (208A-N) destinés à être localisés au sein du voisinage du réseau et plus tard au sein du voisinage du dispositif demandeur (202, 204), et
(ii) la réception d'une estimation en provenance de chaque véhicule en mouvement connecté à un réseau (208A-N) de la pluralité de véhicules en mouvement connectés à un réseau, d'une taille de données capable d'être transmise par le véhicule en mouvement connecté à un réseau (208A-N) au dispositif demandeur (202, 204) lors d'un mouvement dans le voisinage du dispositif demandeur, et l'évaluation des estimations reçues de la pluralité de véhicules en mouvement connectés à un réseau pour sélectionner le ou les véhicules en mouvement connectés à un réseau (208A-N) parmi la pluralité de véhicules en mouvement connectés à un réseau,
dans lequel l'estimation est en fonction de :
une vitesse de communication du véhicule en mouvement connecté à un réseau (208A-N),
une vitesse de communication du dispositif demandeur (202, 204), et
une durée de temps pendant laquelle le véhicule en mouvement connecté à un réseau (208A-N) est censé être en mouvement dans le voisinage du dispositif demandeur (202, 204).

2. Support non transitoire lisible par ordinateur selon la revendication 1, dans lequel la demande est reçue du dispositif demandeur (202, 204).

3. Support non transitoire lisible par ordinateur selon la revendication 1, dans lequel la demande indique une localisation du dispositif demandeur (202, 204).

4. Support non transitoire lisible par ordinateur selon la revendication 1, dans lequel le voisinage du réseau est un voisinage prédéfini dans lequel des communications réseau sont activées avec le réseau, et dans lequel le voisinage du dispositif demandeur (202, 204) est un voisinage prédéfini dans lequel des communications réseau sont activées avec le dispositif demandeur (202, 204).

5. Support non transitoire lisible par ordinateur selon la revendication 1, dans lequel le dispositif demandeur est un routeur domestique (204) avec de multiples consommateurs connectés et dans lequel le routeur domestique donne une préférence à un consommateur connecté exigeant la latence la plus basse.

6. Support non transitoire lisible par ordinateur selon la revendication 1, dans lequel la pluralité de véhicules en mouvement connectés à un réseau (208A-N) sont destinés à être localisés au sein du voisinage du réseau au cours d'une première période de temps définie et à être localisés au sein du voisinage du dispositif demandeur (202, 204) pendant une période de temps définie ultérieure.

7. Support non transitoire lisible par ordinateur selon la revendication 1, dans lequel le fait d'amener, par le système de coordination de véhicule (206), le ou les véhicules en mouvement connectés à un réseau (208A-N) à obtenir le contenu numérique comprend :
un premier véhicule en mouvement connecté à un réseau (208A) en mouvement dans le voisinage du réseau et fournissant une partie du contenu numérique au dispositif demandeur (202, 204) lors d'un mouvement dans le voisinage du dispositif demandeur,
le premier véhicule en mouvement connecté à un réseau (208A) en mouvement sortant du voisinage du réseau ;
le premier véhicule en mouvement connecté à un réseau (208A) transférant une autre partie du contenu numérique à un second véhicule en mouvement connecté à un réseau (208B) qui est en mouvement en direction du voisinage du réseau ; et
le second véhicule en mouvement connecté à un réseau (208B) fournissant cette autre partie du contenu numérique au dispositif demandeur (202, 204).

8. Support non transitoire lisible par ordinateur selon la revendication 1, dans lequel la détermination d'un ou plusieurs véhicules en mouvement connectés à un réseau (208A-N) comporte le fait de conclure un accord avec le ou les véhicules en mouvement connectés à un réseau (208A-N) de la pluralité de véhicules en mouvement connectés à un réseau pour fournir le contenu numérique au dispositif demandeur (202, 204) lors d'un mouvement dans le voisinage du dispositif demandeur.

9. Support non transitoire lisible par ordinateur selon la revendication 1, dans lequel le ou les véhicules en mouvement connectés à un réseau (208A-N) sont un unique véhicule en mouvement connecté à un réseau.

10. Support non transitoire lisible par ordinateur selon la revendication 9, dans lequel le fait d'amener l'unique véhicule en mouvement connecté à un réseau (208A) à obtenir le contenu numérique lors d'un mouvement dans un voisinage d'un réseau et à fournir le contenu numérique au dispositif demandeur (202, 204) lors d'un mouvement dans le voisinage du dispositif demandeur comporte le fait d'amener l'unique véhicule en mouvement connecté à un réseau (208A) à obtenir une entièreté du contenu numérique auprès d'une source de contenu numérique et à fournir l'entièreté du contenu numérique au dispositif demandeur (202, 204) lors d'un mouvement dans le voisinage du dispositif demandeur.

11. Support non transitoire lisible par ordinateur selon la revendication 1, dans lequel le ou les véhicules en mouvement connectés à un réseau (208A-N) sont au moins deux véhicules en mouvement connectés à un réseau.

12. Support non transitoire lisible par ordinateur selon la revendication 11, dans lequel le fait d'amener les au moins deux véhicules en mouvement connectés à un réseau (208A-N) à obtenir le contenu numérique lors d'un mouvement dans un voisinage d'un réseau et à fournir le contenu numérique au dispositif demandeur (202, 204) lors d'un mouvement dans le voisinage du dispositif demandeur comporte le fait d'amener chaque véhicule en mouvement connecté à un réseau (208A-N) des au moins deux véhicules en mouvement connectés à un réseau à obtenir une partie respective du contenu numérique auprès d'une source de contenu numérique et à fournir la partie respective du contenu numérique au dispositif demandeur (202, 204).

13. Support non transitoire lisible par ordinateur selon la revendication 12, dans lequel le dispositif demandeur (202, 204) assemble chaque partie respective du contenu numérique reçu des au moins deux véhicules en mouvement connectés à un réseau (208A-N).

14. Support non transitoire lisible par ordinateur selon la revendication 1, dans lequel le ou les véhicules en mouvement connectés à un réseau (208A-N) obtiennent des parties respectives du contenu numérique auprès d'une source de contenu numérique par l'intermédiaire d'une pluralité de stations réseau différentes au sein d'un voisinage actuel du ou des véhicules en mouvement connectés à un réseau (208A-N).

15. Support non transitoire lisible par ordinateur selon la revendication 1, dans lequel au moins un premier parmi le ou les véhicules en mouvement connectés à un réseau (208A) fournit au moins une partie du contenu numérique au dispositif demandeur (202, 204) par l'intermédiaire d'au moins un second parmi le ou les véhicules en mouvement connectés à un réseau (208B).

16. Support non transitoire lisible par ordinateur selon la revendication 1, dans lequel le fait d'amener, par le système de coordination de véhicule (206), le ou les véhicules en mouvement connectés à un réseau (208A-N) à obtenir le contenu numérique comporte le fait de donner pour instruction au ou aux véhicules en mouvement connectés à un réseau (208A-N) de se mouvoir à une vitesse qui permet au ou aux véhicules en mouvement connectés à un réseau d'être au sein du voisinage du dispositif demandeur (202, 204) pendant une période de temps requise pour transmettre le contenu numérique au dispositif demandeur.

17. Support non transitoire lisible par ordinateur selon la revendication 1, dans lequel le réseau fournit un plus haut débit qu'un réseau à débit plus faible disponible dans une zone du dispositif demandeur (202, 204).

18. Support non transitoire lisible par ordinateur selon la revendication 1, dans lequel le fait d'amener, par le système de coordination de véhicule (206), le ou les véhicules en mouvement connectés à un réseau (208A-N) à obtenir le contenu numérique lors d'un mouvement dans le voisinage du réseau comporte l'un parmi :
le fait d'amener le ou les véhicules en mouvement connectés à un réseau (208A-N) à récupérer le contenu numérique auprès d'une source de contenu numérique lors d'un mouvement dans le voisinage du réseau, ou
le fait d'amener le réseau à fournir le contenu numérique provenant de la source de contenu numérique au ou aux véhicules en mouvement connectés à un réseau (208A-N) lors d'un mouvement dans le voisinage du réseau.

19. Procédé, comprenant :
- la réception, par un système de coordination de véhicule (206) d'une demande pour un contenu numérique à fournir à un dispositif demandeur, le dispositif demandeur étant un routeur réseau domestique ou un dispositif mobile d'un utilisateur ;
en réponse à la demande, la détermination, par le système de coordination de véhicule (206), d'un ou plusieurs véhicules en mouvement connectés à un réseau, disponibles pour obtenir le contenu numérique lors d'un mouvement dans un voisinage d'un réseau et pour fournir le contenu numérique au dispositif demandeur (202, 204) lors d'un mouvement dans un voisinage du dispositif demandeur ; et
le fait d'amener, par le système de coordination de véhicule (206), le ou les véhicules en mouvement connectés à un réseau (208A-N) à obtenir le contenu numérique lors d'un mouvement dans le voisinage du réseau et à fournir le contenu numérique au dispositif demandeur (202, 204) lors d'un mouvement dans le voisinage du dispositif demandeur,
dans lequel la détermination d'un ou plusieurs véhicules en mouvement connectés à un réseau disponibles pour obtenir le contenu numérique lors d'un mouvement dans un voisinage d'un réseau et pour fournir le contenu numérique au dispositif demandeur lors d'un mouvement dans un voisinage du dispositif demandeur (202, 204) comporte :
(i) l'utilisation d'un système de navigation pour détecter une pluralité de véhicules en mouvement connectés à un réseau (208A-N) destinés à être localisés au sein du voisinage du réseau et plus tard au sein du voisinage du dispositif demandeur (202, 204), et
(ii) la réception d'une estimation provenant de chaque véhicule en mouvement connecté à un réseau (208A-N) de la pluralité de véhicules en mouvement connectés à un réseau d'une taille de données capable d'être transmise par le véhicule en mouvement connecté à un réseau au dispositif demandeur lors d'un mouvement dans le voisinage du dispositif demandeur, et
l'évaluation des estimations reçues de la pluralité de véhicules en mouvement connectés à un réseau pour sélectionner le ou les véhicules en mouvement connectés à un réseau parmi la pluralité de véhicules en mouvement connectés à un réseau,
dans lequel l'estimation est en fonction de :
une vitesse de communication du véhicule en mouvement connecté à un réseau,
une vitesse de communication du dispositif demandeur, et
une durée de temps pendant laquelle le véhicule en mouvement connecté à un réseau est censé être en mouvement dans le voisinage du dispositif demandeur.

20. Système, comprenant :
une mémoire non transitoire stockant des instructions ; et
un ou plusieurs processeurs en communication avec la mémoire non transitoire qui exécutent les instructions pour mettre en œuvre le procédé selon la revendication 19.
